# EUROPÄISCHE PATENTSCHRIFT

(11) **EP 3 158 322 B1**
(45) Veröffentlichungstag und Bekanntmachung des Hinweises auf die Patenterteilung: **13.06.2018**
(21) Anmeldenummer: 15720656.6
(22) Anmeldetag: 24.04.2015
(51) Int. Cl.: G01N 21/47, G01N 21/53

(54) **VORRICHTUNG UND VERFAHREN ZUM KALIBRIEREN EINES STREULICHTMESSGERÄTES**
DEVICE AND METHOD FOR CALIBRATING A LIGHT SCATTERING MEASUREMENT DEVICE
DISPOSITIF ET PROCÉDÉ POUR LE CALIBRAGE D'UN DISPOSITIF DE MESURE DE DIFFUSION

(30) Priorität: 23.06.2014 DE 102014212015
(43) Veröffentlichungstag der Anmeldung: 26.04.2017
(73) Patentinhaber: Robert Bosch GmbH, 70442 Stuttgart (DE)
(72) Erfinder: MAI, Hans, 73035 Goeppingen (DE); STENGEL, Karl, 73779 Deizisau (DE); KAERNER, Christof, 73095 Albershausen (DE); HAAGA, Gerhard, 73275 Ohmden (DE); NEUENDORF, Michael, 73207 Plochingen (DE); OSTERTAG, Peter, 70195 Stuttgart (DE)
(86) Internationale Anmeldenummer: PCT/EP2015/058883
(87) Internationale Veröffentlichungsnummer: WO 2015/197227

(56) Entgegenhaltungen:
- EP-A1- 2 600 139
- DE-A1-102010 002 423
- DE-A1-102012 104 721
- DE-A1-102012 200 739

## Beschreibung

### Stand der Technik

Die Erfindung betrifft eine Vorrichtung und ein Verfahren zum Kalibrieren eines Streulichtmessgerätes, wie es zur Messung von Partikelkonzentrationen in Kraftfahrzeugabgasen verwendet wird.

Die Verwendung von Streulichtverfahren zur Messung der Konzentration von Partikeln in Abgasen und anderen Kolloiden ist im Stand der Technik bekannt.

Ein dafür vorgesehenes Messgerät umfasst üblicherweise eine lichtstarke Lichtquelle, wie z. B. ein Laser, die Licht in eine Messkammer strahlt durch die das zu messende Kolloid geleitet wird. Der Messkammer ist wenigstens ein Lichtsensor zugeordnet, der Licht, das von im Kolloid vorhandenen Partikeln gestreut worden ist, detektiert. Um die ordnungsgemäße Funktion eines solches Messgerätes zu überprüfen und das Messgerät zu kalibrieren, ist es erforderlich, in der Messkammer einen definierten Zustand einzustellen, bei dem das eingestrahlte Licht in einer definierten und bekannten Art und Weise gestreut wird. Messgeräte, die für amtliche Messungen verwendet werden, fallen unter die Eichpflicht, wodurch sich die Notwendigkeit, mit hoher Zuverlässigkeit genaue Messergebnisse zu liefern, noch weiter erhöht. Ein derartiges Messgerät wurde in der deutschen Patentanmeldung 102010002423.6 vorgeschlagen.

In dem Dokument DE 10 2012 200 739 A1 wird eine Kalibriervorrichtung zur Kalibrierung eines Streulichtmessgerätes vorgeschlagen, welche zur Messung einer Partikelkonzentration ausgebildet ist.

### Offenbarung der Erfindung

Es ist eine Aufgabe der Erfindung, eine Vorrichtung bereitzustellen, die ein einfaches, zuverlässiges und genaues Überprüfen und Kalibrieren eines Streulichtmessgerätes ermöglicht.

Diese Aufgabe wird durch eine erfindungsgemäße Kalibriervorrichtung nach dem unabhängigen Patentanspruch 1 und ein erfindungsgemäßes Verfahren nach dem Patentanspruch 7 gelöst.

Eine erfindungsgemäße Kalibriervorrichtung zum Kalibrieren eines Streulichtmessgerätes, das zur Messung einer Partikelkonzentration in Kraftfahrzeugabgasen ausgebildet ist, weist wenigstens einen Streukörper auf, der bei Bestrahlung mit Licht Streulicht mit einer durch den Streukörper definierten Intensität und Verteilung abgibt. In dem Streukörper oder an einer Außenfläche des Streukörpers ist eine Kalibrier-Lichtquelle angeordnet.

Mit einem Streukörper, der eine Kalibrier-Lichtquelle aufweist, kann in der Messkammer einfach und schnell Streulicht erzeugt werden. Im Vergleich zur Verwendung eines Eichgases oder herkömmlichen Kalibriervorrichtungen, die z.B. reflektierende Ebenen aufweisen, ist ein solcher Streukörper einfacher zu handhaben, besser mit reproduzierbaren Eigenschaften und der erforderlichen Genauigkeit herstellbar. Auch unterliegt ein solcher Streukörper während der Kalibrierung weder Verbrauch noch Verschleiß.

Unter einer Partikelkonzentration werden im Folgenden auch Größen, die einer Partikelkonzentration entsprechen, wie beispielhaft Trübungswert, Massenkonzentration oder Anzahlkonzentration verstanden.

Die Erfindung umfasst auch ein Verfahren zum Kalibrieren eines Streulichtmessgerätes zur Messung der Partikelkonzentration in Kraftfahrzeugabgasen mit einer Streulichtmesskammer, wenigstens einer Lichtquelle und wenigstens einem Streulichtsensor, wobei das Verfahren die Schritte gemäß Anspruch 7 umfasst. Im Vergleich zu Kalibriervorrichtungen ohne Kalibrier-Lichtquelle kann durch die erfindungsgemäße Vorrichtung und das erfindungsgemäße Verfahren der Einfluss von Reflexionen an den Eintrittsstellen und Austrittsstellen des Streukörpers reduziert werden. Reflexionen an den Eintrittsstellen und Austrittsstellen des Streukörpers haben einen Einfluss auf den Absolutwert der Leistung, die von den Lichtsensoren aufgenommen wird und beeinflussen somit die Messwerte.

Durch die Kalibrier-Lichtquelle im Streukörper, welche flexibel zu- und abgeschaltet werden kann, ist über eine Differenzbildung der Empfängersignale im ein- und ausgeschalteten Zustand der Kalibrier-Lichtquelle eine deutlich genauere Messung und damit Justage des Streulichmessgerätes möglich.

Das erfindungsgemäße Verfahren weist die folgenden Verfahrensschritte auf:
a.) Beleuchten der Kalibriervorrichtung mit Licht aus der Lichtquelle;
b.) Aufnehmen des durch die Kalibriervorrichtung gestreuten Lichtes mit dem wenigstens einen Streulichtsensor und Ausgeben eines ersten Signals;
c.) Einschalten der Kalibrier-Lichtquelle, wobei die Kalibriervorrichtung weiter mit Licht aus der Lichtquelle beleuchtet wird;
d.) Aufnehmen des durch die Kalibriervorrichtung gestreuten Lichtes mit dem wenigstens einen Streulichtsensor und Ausgeben eines Messsignals;
e.) Vergleich der Differenz des ersten Signals und des Messsignals mit einem vorgegebenen Referenzwert.

Ein solches Verfahren ermöglicht es, ein Streulichtmessgerät besonders einfach und zuverlässig mit hoher Genauigkeit zu kalibrieren. Insbesondere kann auf die Verwendung spezieller Eichgase, die aufwändig zu lagern und zu handhaben sind und bei denen die Partikelkonzentration von äußeren Parametern, wie beispielsweise dem Druck und/oder der Temperatur abhängig ist, verzichtet werden. Erfindungsgemäß ist die Kalibrier-Lichtquelle innerhalb des Streukörpers oder an einer Außenfläche des Streukörpers angeordnet. Durch den flexiblen Aufbau ist es möglich abhängig von dem Aufbau des Streulichmessgerätes eine Abstrahlung des Streulichtmessgerätes in definierte Richtungen vorzugeben.

In einer weiteren Ausführungsform kann die Kalibrier-Lichtquelle Licht mit einer definierten Intensität und/oder Leistung aussenden, welche über mindestens einen Strommesspunkt einstellbar ist. Dies ermöglicht eine Kalibrierung der Lichtsensoren in einem breiten Leistungsspektrum. Ohne Kalibrier-Lichtquelle müsste für die Darstellung unterschiedlicher Partikelkonzentrationen im Streulichmessgerät jeweils ein anderer Streukörper mit einer anderen Anzahl und Verteilung von Streuzentren eingesetzt werden. Durch die Variation der Intensität und/oder Leistung der Kalibrier-Lichtquelle lassen sich mit demselben Streukörper unterschiedliche Partikelkonzentrationen abbilden ohne den Streukörper auszutauschen.

Vorteilhaft ist die Anordnung mindestens eines Blendkörpers mit mindestens einer Blendöffnung auf mindestens einer Außenfläche des Streukörpers, da sich dadurch die Strahlung des vom Streukörpers abgegebenen Lichtes definiert in eine Richtung lenken lässt.

Ein weiterer Vorteil ergibt sich bei einer Gestaltung des Streukörpers in der Form, dass Streulicht und/oder Licht der Kalibrier-Lichtquelle über mindestens zwei Außenflächen in unterschiedliche Raumrichtungen abgegeben wird. Dies ermöglicht eine beliebige Anordnung der Lichtsensoren um den Streukörper herum.

Der Streukörper kann das definierte Streuverhalten entweder durch eine entsprechende Gestaltung der Außenflächen oder durch eine vorgegebene Anzahl und/oder Anordnung von Streuzentren aufweisen. Durch den Einsatz von Streuzentren ist es am ehesten möglich das Streuverhalten von einer Partikelkonzentration im Streulichmessgerät abzubilden.

Die Erfindung umfasst auch die Verwendung eines Streukörpers, der bei einer definierten Bestrahlung aus einer Lichtquelle Streulicht mit einer vorgegebenen Intensität und Verteilung abgibt, zur Kalibrierung eines Streulichtmessgerätes, welches zur Messung einer Partikelkonzentration in Kraftfahrzeug-Abgasen oder anderen Kolloiden ausgebildet ist, wobei eine Kalibrier-Lichtquelle, welche Licht mit einer definierten Intensität und/oder Leistung aussendet, innerhalb des Streukörpers oder an einer Außenfläche des Streukörpers angeordnet ist.

Ausführungsbeispiele der Erfindung werden im Folgenden anhand der beigefügten Zeichnungen näher beschrieben. Dabei zeigt:
Figur 1 schematisch den Aufbau eines Streulichtmessgerätes;
Figur 2 schematisch den Aufbau einer erfindungsgemäßen Kalibriervorrichtung gemäß einem ersten Ausführungsbeispiel und
Figur 3 schematisch den Aufbau und die Funktion eines Streukörpers gemäß einem zweiten Ausführungsbeispiel.

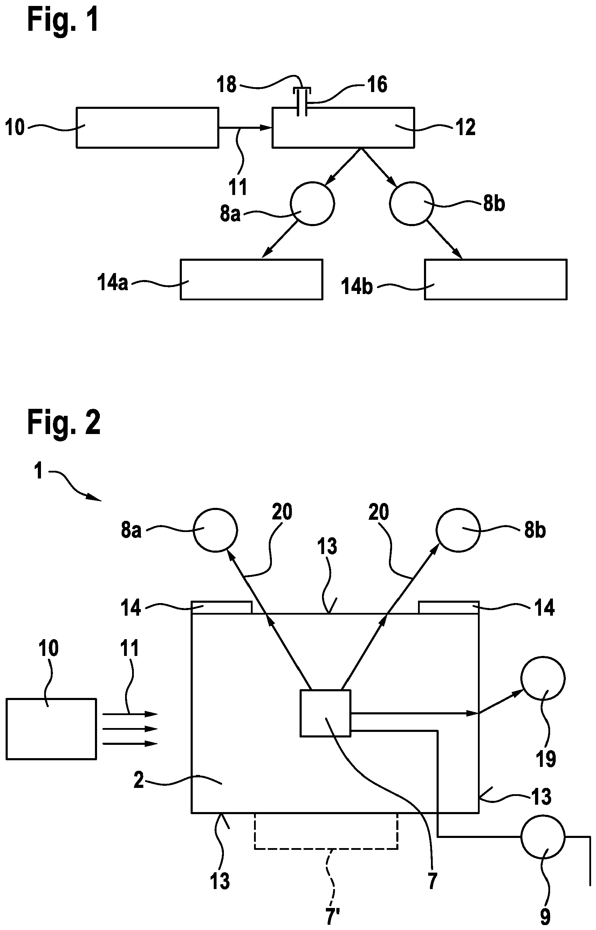

Figur 1 zeigt schematisch den Aufbau eines Streulichtmessgerätes zur Messung einer Partikelkonzentration in Kraftfahrzeugabgasen oder anderen Kolloiden.

Ein derartiges Streulichtmessgerät weist eine Streulichtmesskammer 12 auf, durch die über in der Figur 1 nicht gezeigte Zu- und Ableitungen Abgas aus einem Kraftfahrzeug geführt wird. Dabei kann das Abgas durch den vom Motor des Kraftfahrzeugs erzeugten Druck, sogenannten Abgasgegendruck, durch die Streulichtmesskammer 12 geführt werden. Optional kann zusätzlich eine in der Figur 1 nicht gezeigte Pumpe vorgesehen sein, um die Abgasströmung durch die Streulichtmesskammer 12 zu unterstützen.

Das Streulichtmessgerät hat wenigstens eine Lichtquelle 10, die bspw. als Laser ausgebildet ist. Die Lichtquelle 10 erzeugt im eingeschalteten Zustand einen Lichtstrahl 11 mit einer definierten Intensität und Richtung innerhalb der Streulichtmesskammer 12.

Weiterhin ist/sind in der Streulichtmesskammer 12 wenigstens ein, in dem in der Figur 1 gezeigten Ausführungsbeispiel zwei Lichtsensoren 8a, 8b vorgesehen, welche Licht aus der Lichtquelle 10, das von Partikeln, die in dem durch die Streulichtmesskammer 12 geleiteten Abgasstrom vorhanden sind, gestreut worden ist, detektieren. In der schematischen Darstellung der Figur 1 sind die Lichtquelle 10 und die Lichtsensoren 8a, 8b aus Gründen der besseren Übersichtlichkeit außerhalb der Streulichtmesskammer 12 dargestellt, obwohl sie in der Realität zumindest teilweise innerhalb oder unmittelbar an der Streulichtmesskammer 12 angeordnet sind.

Die Lichtsensoren 8a, 8b sind vorzugsweise in verschiedenen Winkeln in Bezug auf die Richtung des eingestrahlten Lichtstrahls 11 angeordnet, so dass sie in verschiedenen Winkeln gestreutes Streulicht 20 detektieren. Die von den Streulichtsensoren 8a, 8b ausgegebenen elektrischen Signale werden einer oder mehreren elektronischen Verstärker- und Auswerteinrichtungen 14a, 14b zugeführt, welche die Signale auswerten und die Konzentration von Partikeln in der durch die Messkammer 12 geleiteten Gasströmung ermitteln und ausgeben.

Um Messergebnisse mit hoher Genauigkeit, die beispielsweise hohen gesetzlichen Anforderungen entsprechen, zu erhalten, muss ein Streulichtmessgerät regelmäßig kalibriert werden. Dazu wird in der Streulichtmesskammer 12 Streulicht erzeugt, welches einer vorgegebenen, bekannten Partikelkonzentration entspricht, und die Auswerteinrichtungen 14a, 14b werden so justiert, dass sie die vorgegebene, bekannte Partikelkonzentration als Ergebnis der Messung ausgeben. Die Steulichtmesskammer 12 weist wenigstens eine Aufnahmevorrichtung 16 zur Aufnahme einer erfindungsgemäßen Kalibriervorrichtung 1 auf. Im gezeigten Ausführungsbeispiel ist die Aufnahmevorrichtung 16 als Öffnung ausgebildet, durch die eine erfindungsgemäße Kalibriervorrichtung 1, wie sie im Folgenden beschrieben wird, in die Streulichtmesskammer 12 einführbar ist.

Wenn keine Kalibriervorrichtung 1 in die Streulichtmesskammer 12 eingeführt ist, ist die Öffnung der Aufnahmevorrichtung 16 durch einen Deckel 18 verschlossen, um das Eindringen von Partikeln und/oder Licht aus der Umgebung in die Streulichtmesskammer 12 und eine dadurch bewirkte Verfälschung der Messergebnisse zu verhindern.

In einem nicht gezeigten alternativen Ausführungsbeispiel kann die Kalibriervorrichtung 1 durch eine der in der Figur 1 nicht gezeigten Öffnungen, die zum Zuführen oder Abführen der Kraftfahrzeugabgase vorgesehen ist, in die Streulichtmesskammer 12 eingeführt werden. Dies ist möglich, da während des Kalibriervorgangs keine Abgase durch die Streulichtmesskammer 12 geleitet werden.

Figur 2 zeigt in einer schematischen Darstellung den Aufbau einer erfindungsgemäßen Kalibriervorrichtung 1.

Eine erfindungsgemäße Kalibriervorrichtung 1 hat einen Streukörper 2. Der Streukörper 2 weist ein transparentes Trägermaterial auf, das vorzugsweise ein Material mit einer besonders geringen Wärmeausdehnung, wie z. B. ein Glaskeramikmaterial ist.

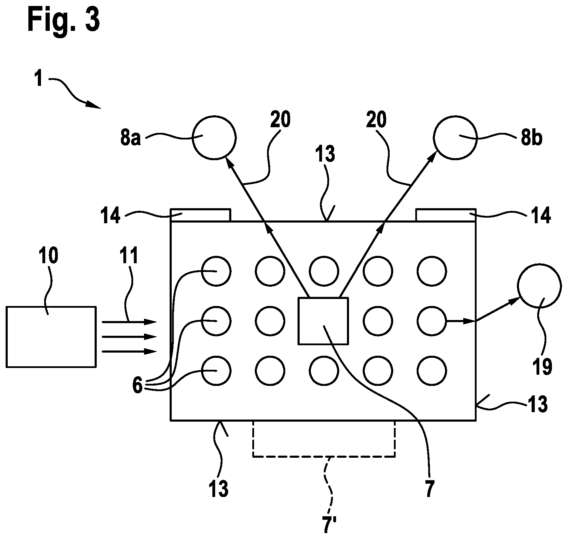

Der Streukörper 2 kann beliebige geometrische Abmessungen aufweisen. Bevorzugt ist die Geometrie des Streukörpers 2 an die Abmessungen der Streulichtmesskammer 12 angepasst. In den Figuren 2 und 3 ist beispielhaft ein Streukörper 2 mit einem quaderförmigen Volumen dargestellt, welcher im Querschnitt dargestellt ist.

Die Kalibriervorrichtung 1 weist eine Kalibrier-Lichtquelle 7 auf, welche innerhalb des Streukörpers 2 angeordnet ist. In einem alternativen Ausführungsbeispiel ist die Kalibrier-Lichtquelle 7' an einer Außenfläche 13 des Streukörpers 2 angeordnet. Dieses Ausführungsbeispiel ist in der Fig. 2 und Fig. 3 durch gestrichelte Linien gezeigt. In dem alternativen Ausführungsbeispiel 7' gibt die Kalibrier-Lichtquelle 7' eine Lichtstrahlung in Richtung des Streukörpers 2 ab, so dass das Licht den Streukörper 2 durchläuft, bevor es an einer oder mehrerer Außenflächen 13 den Streukörper 2 wieder verlässt.

Die Kalibrier-Lichtquelle 7, 7' ist beliebig ein- und ausschaltbar. Die Kalibrier-Lichtquelle 7, 7' kann Licht mit einer definierten Intensität und/oder Leistung aussenden.

Die Kalibrier-Lichtquelle 7, 7' ist bevorzugt als LED ausgebildet. Eine LED lässt sich über mehrere Dekaden durch Einstellung eines Stromes in der Lichtleistung steuern. Mit Hilfe eines Strommesspunktes 9 lässt sich der zugeführte Strom regeln, so dass die Kalibrier-Lichtquelle 7, 7' in Richtung der Lichtsensoren 8a, 8b Licht einer reproduzierbaren Intensität aussendet.

Figur 3 zeigt eine alternative Ausführungsform eines Streukörpers 2, in dem eine Anzahl von Streuzentren 6 angeordnet ist. Diese Streuzentren 6 haben bevorzugt eine definierte Größe und einen definierten gegenseitigen Abstand voneinander. Vorzugsweise sind die Streuzentren 6 innerhalb des Streukörpers 2 in einer regelmäßigen Gitterstruktur angeordnet, wie schematisch in der Figur 3 gezeigt. Die Streuzentren 6 können in dem Streukörper 2 ausgebildete Kristallite sein.

Ein derart aufgebauter Streukörper 2 hat definierte, über einen langen Zeitraum konstante Streueigenschaften, welche den Streueigenschaften einer bestimmten Partikelkonzentration entsprechen. Bei Bestrahlung mit Licht 11 aus der Lichtquelle 10 gibt der Streukörper 2 Streulicht 20 mit einer definierten Intensität und räumlichen Verteilung ab. Das von dem Streukörper 2 erzeugte Streulicht 20 trifft auf die Streulichtsensoren 8a und 8b und wird von diesen detektiert, wie in der Figur 3 schematisch gezeigt.

In einem alternativen Ausführungsbeispiel weist die Kalibriervorrichtung 1 an mindestens einer Außenfläche 13 des Streukörpers 2 ein Blendkörper 14 mit mindestens einer Blendöffnung auf. Dieser Blendkörper 14 kann an einer oder mehreren Außenflächen des Streukörpers 2 mit oder ohne Streuzentren 6 angeordnet sein.

In allen Ausführungsbeispielen kann der Streukörpers 2 so gestaltet sein, dass das Streulicht 20, 20' der Lichtquelle 10 und/oder das Licht der Kalibrier-Lichtquelle 7, 7' über mindestens zwei Außenflächen 13 in unterschiedliche Raumrichtungen abgegeben wird.

Zur Durchführung einer erfindungsgemäßen Kalibrierung wird eine erfindungsgemäße Kalibriervorrichtung 1, die einen Streukörper 2, wie er in der Figur 2 oder 3 gezeigt ist, aufweist, durch die Öffnung der Aufnahmevorrichtung 16 in eine definierte Position innerhalb der Messkammer 12 gebracht. Die Kalibrier-Lichtquelle 7,7' wird eingeschaltet, so dass die Kalibrier-Lichtquelle 7,7' Licht einer vorgegebenen Intensität erzeugt. Dieses Licht wird je nach Ausführungsform des Streukörper 2 in einer definierten, vorgegebenen räumlichen Intensitätsverteilung gestreut und von den Streulichtsensoren 8a, 8b erfasst und in elektrische Signale umgewandelt. Die elektrischen Signale werden von einer oder mehrerer Auswerteinrichtungen 14a, 14b in eine Partikelkonzentration umgerechnet.

Die von den Auswerteinrichtungen 14a, 14b ermittelte Partikelkonzentration wird mit einer definierten Partikelkonzentration, die der jeweiligen Intensität der Kalibrier-Lichtquelle 7,7' zugeordnet ist, verglichen. Weicht die von den Auswerteinrichtungen 14a, 14b ermittelte Partikelkonzentration von der vorgegebenen, dem Streukörper 2 zugeordneten Partikelkonzentration ab, so werden die Auswerteinrichtungen 14a, 14b nachjustiert, bis die von den Auswerteinrichtungen 14a, 14b ermittelte Partikelkonzentration innerhalb der vorgegebenen Genauigkeit der vorgegebenen, der Intensität der Kalibrier-Lichtquelle 7,7' zugeordneten Partikelkonzentration entspricht.

Das Vergleichen der berechneten Partikelkonzentration mit der vorgegebenen Partikelkonzentration und das Justieren der Auswerteinrichtungen 14a, 14b kann automatisch oder manuell erfolgen.

Zur Durchführung einer weiteren erfindungsgemäßen Kalibrierung wird eine erfindungsgemäße Kalibriervorrichtung 1, die einen Streukörper 2, wie er in der Figur 2 oder 3 gezeigt ist, aufweist, durch die Öffnung der Aufnahmevorrichtung 16 in eine definierte Position innerhalb der Messkammer 12 gebracht. Hierbei wird die Kalibriervorrichtung 1 mit Licht 11 aus der Lichtquelle 10 beleuchtet. Das Licht 11 wird durch den Streukörper 11 gestreut und das gestreute Licht 20 wird durch die Kalibriervorrichtung 1 mit dem wenigstens einen Lichtsensor 8a, 8b aufgenommen und einem ersten Signal zugeordnet, welches ausgegeben wird.

Danach wird, während der Beleuchtung des Streukörpers 2 mit Licht durch die Lichtquelle 10, die Kalibrier-Lichtquelle 7,7' eingeschaltet, so dass die Kalibrier-Lichtquelle 7,7' Licht einer vorgegebenen Intensität erzeugt. Das Licht der Lichtquelle 10 und der Kalibrier-Lichtquelle 7,7' überlagert sich und wird am Streukörper 2 gestreut bevor es von den Streulichtsensoren 8a, 8b erfasst und in ein Messsignal umgewandelt wird, welches ausgegeben wird.

In einem weiteren Schritt wird die Differenz des ersten Signals und des Messsignals gebildet. Die von den Auswerteinrichtungen 14a, 14b ermittelte Differenz des ersten Signals und des Messsignals wird mit einer definierten Partikelkonzentration, die der jeweiligen Intensität der Kalibrier-Lichtquelle 7,7' zugeordnet ist, verglichen. Weicht die von den Auswerteinrichtungen 14a, 14b ermittelte Partikelkonzentration von der vorgegebenen, dem Streukörper 2 zugeordneten Partikelkonzentration ab, so werden die Auswerteinrichtungen 14a, 14b nachjustiert, bis die von den Auswerteinrichtungen 14a, 14b ermittelte Partikelkonzentration innerhalb der vorgegebenen Genauigkeit der vorgegebenen, der Intensität der Kalibrier-Lichtquelle 7,7' zugeordneten Partikelkonzentration entspricht.

Durch Variation der Intensität der Kalibrier-Lichtquelle 7,7' kann das Streuverhalten des Streukörpers 2 dem Streuverhalten von Abgasen mit unterschiedlichen Partikelkonzentrationen angepasst werden und die Kalibrierung des Streulichtmessgeräts an verschiedenen Betriebspunkten einfach durchgeführt werden. Dadurch kann eine besonders genaue Kalibrierung des Streulichtmessgerätes über einen weiten Messbereich erreicht werden.

## Patentansprüche

1. Kalibriervorrichtung (1) zur Kalibrierung eines Streulichtmessgerätes, das zur Messung einer Partikelkonzentration, insbesondere in Kraftfahrzeugabgasen, ausgebildet ist, wobei die Kalibriervorrichtung (1) wenigstens einen Streukörper (2) aufweist, der bei Bestrahlung mit Licht (11) Streulicht (20) mit einer durch den Streukörper (2) definierten Intensität und Verteilung abgibt,
wobei die Kalibriervorrichtung (1) eine Kalibrier-Lichtquelle (7) aufweist, **dadurch gekennzeichnet, dass** die Kalibrier-Lichtquelle (7) innerhalb des Streukörpers (2) oder an einer Außenfläche (13) des Streukörpers (2) angeordnet ist.

2. Kalibriervorrichtung (1) nach Anspruch 1, wobei die Kalibrier-Lichtquelle (7) ein- und ausschaltbar ist.

3. Kalibriervorrichtung (1) nach einem der vorhergehenden Ansprüche, wobei die Kalibrier-Lichtquelle (7) dafür ausgelegt ist, Licht mit einer definierten Intensität und/oder Leistung auszusenden, welches über mindestens einen Strommesspunkt (9) einstellbar ist.

4. Kalibriervorrichtung (1) nach einem der vorhergehenden Ansprüche, wobei mindestens einer Außenfläche (13) des Streukörpers (2) ein Blendenkörper (14) mit mindestens einer Blendenöffnung zugeordnet ist.

5. Kalibriervorrichtung (1) nach einem der vorhergehenden Ansprüche, wobei der Streukörper (2) so gestaltet ist, dass Streulicht (20, 20') und/oder Licht der Kalibrier-Lichtquelle (7) über mindestens zwei Außenflächen (13) in unterschiedliche Raumrichtungen abgegeben wird.

6. Kalibriervorrichtung (1) nach einem der vorhergehenden Ansprüche, wobei der Streukörper (2) eine Anzahl von Streuzentren (6) hat.

7. Verfahren zur Kalibrierung eines Streulichtmessgeräts, das zur Messung der Partikelkonzentration in Kraftfahrzeugabgasen ausgebildet ist und eine Streulichtmesskammer (12), wenigstens eine Lichtquelle (10) und wenigstens einen Streulichtsensor (8a, 8b, 19) aufweist, wobei eine Kalibriervorrichtung (1) nach einem der Ansprüche 1 bis 7 in eine definierte Position in die Streulichtmesskammer (12) eingebracht wird und folgende Schritte durchgeführt werden:
1.) Beleuchten des Streukörpers (2) mit Licht (11) aus der Lichtquelle (10);
2.) Aufnehmen des durch den Streukörper (2) gestreuten Lichtes (20) mit dem wenigstens einen Streulichtsensor (8a, 8b) und Ausgeben eines ersten Signals;
3.) Einschalten der Kalibrier-Lichtquelle;
4.) Aufnehmen des durch den Streukörper (2) gestreuten Lichtes (20) durch den wenigstens einen Streulichtsensor (8a, 8b, 9) und Ausgeben eines Messsignals
5.) Vergleich der Differenz des ersten Signals und des Messsignals mit einem vorgegebenen Referenzwert, wobei die Schritte 3. und 4. durchgeführt werden, während der Streukörper (2) mit Licht (11) aus der Lichtquelle (10) beleuchtet wird.

8. Verwendung einer Kalibriervorrichtung gemäß Anspruch 1 zur Kalibrierung eines Streulichtmessgerätes, welches zur Messung einer Partikelkonzentration in Kraftfahrzeug-Abgasen oder anderen Kolloiden ausgebildet ist.

## Claims

1. Calibration device (1) for calibrating a scattered-light measuring instrument configured for measuring a particle concentration, in particular in motor vehicle exhaust gases, wherein the calibration device (1) comprises at least one scattering body (2) which, upon irradiation with light (11), emits scattered light (20) having an intensity and distribution defined by the scattering body (2),
wherein the calibration device (1) comprises a calibration light source (7), **characterized in that** the calibration light source (7) is arranged within the scattering body (2) or at an outer surface (13) of the scattering body (2).

2. Calibration device (1) according to Claim 1, wherein the calibration light source (7) is switchable on and off.

3. Calibration device (1) according to either of the preceding claims, wherein the calibration light source (7) is designed to emit light having a defined intensity and/or power, which light is settable via at least one current measurement point (9).

4. Calibration device (1) according to any of the preceding claims, wherein a stop body (14) having at least one stop aperture is assigned to at least one outer surface (13) of the scattering body (2).

5. Calibration device (1) according to any of the preceding claims, wherein the scattering body (2) is fashioned such that scattered light (20, 20') and/or light from the calibration light source (7) are/is emitted in different spatial directions via at least two outer surfaces (13).

6. Calibration device (1) according to any of the preceding claims, wherein the scattering body (2) has a number of scattering centres (6).

7. Method for calibrating a scattered-light measuring instrument configured for measuring the particle concentration in motor vehicle exhaust gases and comprising a scattered-light measuring chamber (12), at least one light source (10) and at least one scattered-light sensor (8a, 8b, 19), wherein a calibration device (1) according to any of Claims 1 to 7 is introduced into a defined position into the scattered-light measuring chamber (12) and the following steps are carried out:
1.) illuminating the scattering body (2) with light (11) from the light source (10);
2.) capturing the light (20) scattered by the scattering body (2) by means of the at least one scattered-light sensor (8a, 8b) and outputting a first signal;
3.) switching on the calibration light source;
4.) capturing the light (20) scattered by the scattering body (2) by means of the at least one scattered-light sensor (8a, 8b, 9) and outputting a measurement signal;
5.) comparing the difference between the first signal and the measurement signal with a predefined reference value, wherein steps 3. and 4. are carried out while the scattering body (2) is illuminated with light (11) from the light source (10).

8. Use of a calibration device according to Claim 1 for calibrating a scattered-light measuring instrument configured for measuring a particle concentration in motor vehicle exhaust gases or other colloids.

## Revendications

1. Dispositif de calibrage (1) destiné à calibrer un appareil de mesure de la lumière diffusée, qui est conçu pour mesurer une concentration de particules, notamment dans les gaz d'échappement d'un véhicule automobile, le dispositif de calibrage (1) comprenant au moins un diffuseur (2), qui lors d'une irradiation avec de la lumière (11) délivre de la lumière diffusée (20) avec une intensité et une distribution définies par le diffuseur (2),
le dispositif de calibrage (1) comportant une source lumineuse de calibrage (7), **caractérisé en ce que** la source lumineuse de calibrage (7) est placée à l'intérieur du diffuseur (2) ou sur une surface extérieure (13) du diffuseur (2).

2. Dispositif de calibrage (1) selon la revendication 1, la source lumineuse de calibrage (7) pouvant être activée et désactivée.

3. Dispositif de calibrage (1) selon l'une quelconque des revendications précédentes, la source lumineuse de calibrage (7) étant conçue pour émettre de la lumière avec une intensité et/ou une puissance définie, laquelle est réglable via au moins un point de mesure du courant (9).

4. Dispositif de calibrage (1) selon l'une quelconque des revendications précédentes, à au moins une surface extérieure (13) du diffuseur (2) étant associé un corps de diaphragme (14) avec au moins une ouverture de diaphragme.

5. Dispositif de calibrage (1) selon l'une quelconque des revendications précédentes, le diffuseur (2) étant conçu de telle sorte que de la lumière diffusée (20, 20') et/ou de la lumière de la source lumineuse de calibrage (7) soit délivrée par l'intermédiaire d'au moins deux surfaces extérieures (13) dans différentes directions dans l'espace.

6. Dispositif de calibrage (1) selon l'une quelconque des revendications précédentes, le diffuseur (2) disposant d'un nombre de centres de diffusion (6).

7. Procédé destiné à calibrer un appareil de mesure de la lumière diffusée, qui est conçu pour mesurer la concentration de particules dans les gaz d'échappement d'un véhicule automobile et qui comporte une chambre de mesure de la lumière diffusée (12), au moins une source lumineuse (10) et au moins un capteur de la lumière diffusée (8a, 8b, 19), lors duquel on introduit un dispositif de calibrage (1) selon l'une quelconque des revendications 1 à 7 dans une position définie dans la chambre de mesure de la lumière diffusée (12) et on réalise les étapes suivantes :
1.) de l'irradiation du diffuseur (2) avec de la lumière (11) émanant de la source lumineuse (10) ;
2.) de l'enregistrement de la lumière (20) diffusée par le diffuseur (2) avec l'au moins un capteur de la lumière diffusée (8a, 8b) et de la délivrance d'un premier signal ;
3.) de l'activation de la source lumineuse de calibrage ;
4.) de l'enregistrement de la lumière (20) diffusée par le diffuseur (2) par l'au moins un capteur de la lumière diffusée (8a, 8b, 9) et de la délivrance d'un signal de mesure ;
5.) de la comparaison de la différence entre le premier signal et le signal de mesure avec une valeur de référence prédéfinie, les étapes 3 et 4 étant réalisées alors que le diffuseur (2) est éclairé avec de la lumière (11) émanant de la source lumineuse (10).

8. Utilisation d'un dispositif de calibrage selon la revendication 1 pour calibrer un appareil de mesure de la lumière diffusée, lequel est conçu pour mesurer une concentration de particules dans des gaz d'échappement d'un véhicule automobile ou dans d'autres colloïdes.
